# FASCICULE DE BREVET EUROPEEN

(11) **EP 3 041 728 B1**
(45) Date de publication et mention de la délivrance du brevet: **18.04.2018**
(21) Numéro de dépôt: 14777722.1
(22) Date de dépôt: 05.09.2014
(51) Int. Cl.: B62B 3/02, B62B 5/06, F16H 25/18, F16H 21/18, F16H 21/54

(54) **DISPOSITIF DE RENVOI D'ANGLE À PIÈCE DE COUPLAGE COOPÉRANT AVEC UNE BARRE DE COMMANDE, POUR UN ÉQUIPEMENT TRANSFORMABLE**
KUPPLUNGSVORRICHTUNG UMFASSEND EIN WINKELGETRIEBE UND EINE STEUERSTANGE FÜR EINE VERWANDELBARE VORRICHTUNG
COUPLING DEVICE COMPRISING AN ANGULAR GEAR AND A CONTROL ROD FOR A CONVERTIBLE APPARATUS

(30) Priorité: 06.09.2013 FR 1358545
(43) Date de publication de la demande: 13.07.2016
(73) Titulaire: PSA Automobiles SA, 78300 Poissy (FR); Herbault, Patrick, 92250 La Garenne Colombes (FR)
(72) Inventeur: HERBAULT, Patrick, F-92250 La Garenne Colombes (FR)
(86) Numéro de dépôt international: PCT/FR2014/052206
(87) Numéro de publication internationale: WO 2015/033079

(56) Documents cités:
- WO-A1-2009/127093
- US-A- 3 401 569
- US-A1- 2013 147 163

## Description

L'invention concerne les dispositifs qui sont utilisés dans certains équipements (ou systèmes ou encore appareils) transformables pour effectuer un renvoi d'angle.

On notera que l'invention concerne de nombreux équipements, systèmes ou appareils pouvant être transformés afin de pouvoir être entreposés ou déposés, et notamment les chariots de transport, les poussettes, les bagages, les matériels médicaux pliables, les meubles pliables, les mobiliers d'appoints, les mobiliers de jardin, et les matériels de camping.

On entend ici par « chariot de transport » un système (ou appareil) transformable, comprenant au moins une paire de jambes sensiblement parallèles entre elles, pouvant rouler lorsqu'il est tiré ou poussé et pouvant supporter au moins une charge. Par conséquent, il pourra s'agir d'un diable, d'un chariot de manutention, d'un chariot de course, d'un brancard, ou d'un élément modulaire de faux-plancher de véhicule, par exemple.

Afin de réduire l'encombrement des équipements précités, par exemple lorsqu'ils ne sont pas utilisés, il est connu de leur adjoindre au moins un dispositif de renvoi d'angle chargé de transformer la rotation d'une première barre en rotation d'un élément mobile, comme par exemple une seconde barre. A titre d'exemple, dans un chariot de transport pliable (ou transformable) la cinématique de pliage/dépliage peut comprendre au moins un dispositif de renvoi d'angle chargé de transformer le pliage par rotation d'une première barre ou d'un premier couple de barres en une rotation d'un autre élément de la structure pliable, comme par exemple une seconde barre ou un second couple de barres. Ainsi, dans le cas d'un chariot de transport, au moment du pliage les roues ou les pieds peuvent être rangé(e)s dans le plan du chariot replié grâce à la transformation d'une première rotation d'un quart de tour en une seconde rotation d'un quart de tour. Des chariots de ce type sont notamment décrits dans les documents brevet FR 1058256, FR 1058257, FR 1151025, FR 1251885, FR 1251886, PCT/FR2011/052202 et PCT/FR2011/052204. Le document US 3401569 A décrit un dispositif de renvoi d'angle selon le préambule de la revendication 1. Généralement le dispositif de renvoi d'angle comprend des engrenages coopérant entre eux pour assurer un renvoi à 90°. Ces engrenages peuvent être soit coniques lorsque les axes de rotation sont concourants, soit hélicoïdaux à axes croisés lorsque les axes de rotation ne se croisent pas.

Ce type de dispositif de renvoi d'angle permet de plier/déplier un chariot posé au sol, y compris lorsqu'il supporte une charge importante (typiquement jusqu'à environ une centaine de kilos). Hélas, il présente plusieurs inconvénients.

En effet, les engrenages conservent toujours un jeu qui est acceptable pendant les phases de pliage/dépliable mais qui s'avère souvent préjudiciable lorsque l'équipement est déplié et utilisé ou bien plié et entreposé ou transporté. On est alors obligé de prévoir en complément des moyens de blocage et de maintien en position pliée ou dépliée, d'une part, pour que les dents des engrenages ne fonctionnent pas en permanence, et, d'autre part, pour assurer un verrouillage en position finale pliée ou dépliée.

De plus, les engrenages classiques transforment linéairement une première rotation sur N degrés en une seconde rotation sur N degrés, et cela continûment sur toute la plage. Or, il serait intéressant dans certains cas de ne pas avoir de renvoi d'angle sur une partie de la première rotation (par exemple sur les dix ou vingt derniers degrés) pour ne pas interférer avec le mécanisme de verrouillage qui nécessite une certaine latitude et l'engrènement des dernières dents. De même, on pourrait souhaiter disposer d'un réglage en hauteur de l'équipement (par exemple un chariot) se traduisant par une première rotation sur une plage d'une vingtaine de degrés au cours de laquelle on ne souhaite pas que le plan des roues (ou pieds) pivote.

Enfin, lorsque l'équipement n'est pas destiné à être déplié lorsqu'il est posé sur le sol y compris avec une charge (très) importante, l'utilisation d'engrenages n'est plus une nécessité technique. Or, dans certains domaines techniques on est parfois réticent à utiliser des engrenages, notamment du fait de leur coût et de leurs problèmes de maintenance (nécessité de lubrifier, graisser et étanchéifier).

L'invention a donc notamment pour but de proposer une solution alternative qui ne présente pas tout ou partie des inconvénients précités.

Elle propose notamment à cet effet un dispositif de renvoi d'angle, d'une part, destiné à équiper un équipement transformable comprenant une première barre montée à rotation sur un premier axe et un élément mobile propre à être entraîné en rotation sur lui-même, et, d'autre part, comprenant des moyens de couplage agencés pour contraindre l'élément mobile à tourner sur lui-même lorsque la première barre est entraînée en rotation.

Ce dispositif se caractérise par le fait que ses moyens de couplage comprennent une pièce présentant un second axe de rotation espacé d'une distance choisie du premier axe et perpendiculaire à ce dernier, destinée à être solidarisée fixement à l'élément mobile en un premier endroit, et comportant en un second endroit, espacé de ce premier endroit, un passage présentant une forme choisie propre à permettre un déplacement interne d'une partie choisie de la première barre destiné à l'entraîner en rotation sur un premier secteur angulaire lorsque la première barre est entraînée en rotation sur un deuxième secteur angulaire strictement inférieur au premier secteur angulaire.

Grâce à l'invention, on obtient de façon simple et peu onéreuse un renvoi d'angle avec démultiplication de la rotation de la première barre pour obtenir une rotation plus importante de la seconde barre.

A titre d'exemple, dans le cas d'un chariot à quatre roues, il est possible d'implanter deux dispositifs de renvoi d'angle selon l'invention à l'arrière du chariot pour entraîner directement la rotation des moyens de support de roues arrière, et indirectement la rotation des moyens de support de roues avant, via un couplage à une seconde barre.

Egalement à titre d'exemple, dans le cas d'une poussette canne, il est possible d'implanter, d'une part, deux dispositifs de renvoi d'angle selon l'invention à l'arrière de la poussette pour entraîner directement la rotation des moyens de support de roues arrière à partir de la rotation de bras arrière sensiblement perpendiculaires en position ouverte (ou déployée), et, d'autre part, deux dispositifs de renvoi d'angle avant selon l'invention à l'avant de la poussette pour entraîner directement la rotation des moyens de support de roues avant à partir de la rotation de bras avant sensiblement à 45° en position ouverte (ou déployée). De ce fait, il n'est pas nécessaire de relier les moyens de support de roues arrière et les moyens de support de roues avant par une barre de liaison.

Le dispositif selon l'invention peut comporter d'autres caractéristiques qui peuvent être prises séparément ou en combinaison, et notamment :
- dans un premier mode de réalisation, sa pièce peut être une plaque dans laquelle le passage est un trou traversant oblong ;
   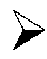 le trou traversant peut être linéaire et orienté suivant une direction qui est perpendiculaire au second axe ;
   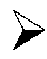 en variante, le trou traversant peut comprendre une première sous-partie linéaire et orientée suivant une première direction perpendiculaire au second axe, et une seconde sous-partie linéaire prolongeant la première sous-partie suivant une seconde direction inclinée par rapport à la première direction ;
- dans un deuxième mode de réalisation, sa pièce peut être une plaque comprenant, d'une première part, une première partie solidarisée fixement à la seconde barre dans un plan sensiblement perpendiculaire au second axe, et comprenant une première sous-partie d'un trou traversant oblong définissant le passage, linéaire et orientée suivant une première direction perpendiculaire au second axe et une deuxième sous-partie de ce trou traversant oblong, linéaire et prolongeant la première sous-partie suivant une deuxième direction inclinée par rapport à la première direction, d'une deuxième part, une deuxième partie prolongeant la première partie sensiblement perpendiculairement et comportant une troisième sous-partie du trou traversant oblong, linéaire et prolongeant la deuxième sous-partie suivant une troisième direction sensiblement parallèle au second axe, et, d'une troisième part, une troisième partie prolongeant la deuxième partie sensiblement perpendiculairement et solidarisée fixement à la seconde barre dans un plan sensiblement perpendiculaire au second axe ;
- dans un troisième mode de réalisation, sa pièce peut comprendre, d'une première part, une première partie en forme de plaque solidarisée fixement à la seconde barre dans un plan sensiblement perpendiculaire au second axe, et comprenant une première sous-partie d'un trou traversant oblong définissant le passage, linéaire et orientée suivant une première direction perpendiculaire au second axe et une deuxième sous-partie de ce trou traversant oblong, linéaire et prolongeant la première sous-partie suivant une deuxième direction inclinée par rapport à la première direction, d'une deuxième part, une deuxième partie constituant une portion d'un cylindre prolongeant la première partie sensiblement perpendiculairement, et comportant une troisième sous-partie du trou traversant oblong, hélicoïdale et prolongeant la deuxième sous-partie, et, d'une troisième part, une troisième partie en forme de plaque prolongeant la deuxième partie sensiblement perpendiculairement et solidarisée fixement à la seconde barre dans un plan sensiblement perpendiculaire au second axe ;
- dans les deuxième et troisième modes de réalisation, la deuxième partie de la pièce peut être solidarisée fixement à des moyens de support auxquels est solidarisée à rotation au moins une roue ;
- dans un quatrième mode de réalisation, sa pièce peut présenter une forme au moins partiellement sphérique. Dans ce cas, le passage peut être un conduit partiellement ouvert et comportant au moins une sous-partie hélicoïdale ;
- la partie choisie de la première barre peut être choisie parmi (au moins) une tige rapportée à une extrémité de la première barre, parallèle à l'axe de cette dernière, et comportant au moins une portion d'extrémité présentant une section inférieure à une section de la première barre, une partie d'extrémité de la première barre présentant une section inférieure à une section de la première barre, une partie intermédiaire de la première barre, et une partie intermédiaire de la première barre présentant une section inférieure à une section présentée par des parties de la première barre qui encadrent la partie intermédiaire.

L'invention propose également un équipement transformable comprenant une première barre montée à rotation sur un premier axe, au moins un élément mobile propre à être entraîné en rotation sur lui-même, et au moins un dispositif de renvoi d'angle du type de celui présenté ci-avant et couplé à la première barre et à l'élément mobile.

Un tel équipement peut, par exemple, être choisi parmi (au moins) un chariot de transport, une poussette, un bagage, un matériel médical pliable, un meuble pliable, un mobilier d'appoint pliable, un mobilier de jardin pliable, et un matériel de camping pliable.

D'autres caractéristiques et avantages de l'invention apparaîtront à l'examen de la description détaillée ci-après, et des dessins annexés (obtenus en CAO/DAO, d'où le caractère apparemment discontinu de certaines lignes et certains niveaux de gris), sur lesquels :
- la figure 1 illustre de façon schématique, dans une vue en perspective du dessous, un exemple de réalisation d'un chariot de transport équipé de deux premiers exemples de réalisation de dispositifs de renvoi d'angle selon l'invention, et en position déployée,
- la figure 2 illustre de façon schématique, dans une vue en perspective du dessus, le chariot de transport de la figure 1 en position repliée,
- la figure 3 illustre de façon schématique, dans des vues de côté (à gauche) et de face (à droite), un deuxième exemple de réalisation d'un dispositif de renvoi d'angle selon l'invention couplé à des première et seconde barres placées dans un état correspondant à une position repliée,
- la figure 4 illustre de façon schématique, dans des vues de côté (à gauche) et de face (à droite), le dispositif de renvoi d'angle de la figure 3 avec les première et seconde barres placées dans un état correspondant à une position déployée,
- la figure 5 illustre de façon schématique, dans des vues de côté (à gauche) et de face (à droite), un troisième exemple de réalisation d'un dispositif de renvoi d'angle selon l'invention couplé à des première et seconde barres placées dans un état correspondant à une position repliée,
- la figure 6 illustre de façon schématique, dans des vues de côté (à gauche) et de face (à droite), le dispositif de renvoi d'angle de la figure 5 avec les première et seconde barres placées dans un état correspondant à une première position intermédiaire pendant une phase de déploiement,
- la figure 7 illustre de façon schématique, dans des vues de côté (à gauche) et de face (à droite), le dispositif de renvoi d'angle de la figure 5 avec les première et seconde barres placées dans un état correspondant à une seconde position intermédiaire pendant la phase de déploiement,
- la figure 8 illustre de façon schématique, dans des vues de côté (à gauche) et de face (à droite), le dispositif de renvoi d'angle de la figure 5 avec les première et seconde barres placées dans un état correspondant à une position déployée,
- la figure 9 illustre de façon schématique, dans des vues de côté (à gauche) et de face (à droite), le premier exemple de réalisation du dispositif de renvoi d'angle de la figure 1 avec les première et seconde barres placées dans un état correspondant à une position intermédiaire pendant une phase de déploiement,
- la figure 10 illustre de façon schématique, dans des vues de côté (à gauche) et de face (à droite), le dispositif de renvoi d'angle de la figure 9 avec les première et seconde barres placées dans un état correspondant à une position déployée,
- la figure 11 illustre de façon schématique, dans des vues de côté (à gauche) et de face (à droite), le dispositif de renvoi d'angle selon l'invention couplé à une variante de première barre placée dans un état correspondant à une position intermédiaire pendant une phase de déploiement,
- la figure 12 illustre de façon schématique, dans une vue en perspective de côté, un quatrième exemple de réalisation d'un dispositif de renvoi d'angle selon l'invention couplé à des première et seconde barres placées dans un état correspondant à une position déployée,
- la figure 13 illustre de façon schématique, dans une vue en perspective de côté, le dispositif de renvoi d'angle de la figure 12 avec les première et seconde barres placées dans un état correspondant à une position repliée,
- la figure 14 illustre de façon schématique, dans une vue en perspective de côté, un cinquième exemple de réalisation d'un dispositif de renvoi d'angle selon l'invention couplé à des première et seconde barres placées dans un état correspondant à une position déployée, et
- la figure 15 illustre de façon schématique, dans une vue en perspective de côté, le dispositif de renvoi d'angle de la figure 14 avec les première et seconde barres placées dans un état correspondant à une position repliée.

L'invention a pour but de proposer un dispositif de renvoi d'angle D destiné à faire partie d'un équipement, système ou appareil CT transformable et comportant au moins une première barre B1 dont l'entraînement en rotation est destiné à entraîner au moins un élément mobile, comme par exemple et non limitativement une seconde barre B2.

Dans ce qui suit, on considère, à titre d'exemple non limitatif, que le dispositif de renvoi d'angle D est destiné à équiper un chariot de transport CT pouvant transporter au moins une charge et être transformé afin de pouvoir être entreposé ou déposé, éventuellement avec cette charge.

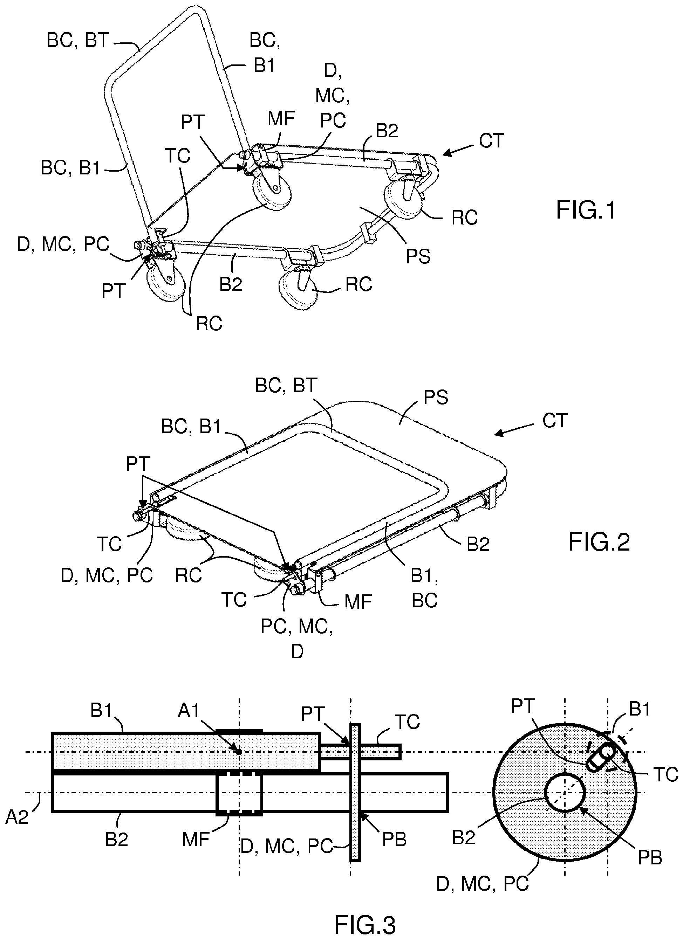

Par exemple, et comme illustré non limitativement sur les figures 1 et 2, le chariot de transport CT peut être un chariot de manutention à quatre roues RC. Mais il pourrait également s'agir d'un diable, d'un chariot de course (ou « caddie »), d'un brancard, ou d'un élément modulaire de faux-plancher de véhicule, par exemple. Il est rappelé que l'on entend ici par « chariot de transport » un système (ou appareil) transformable, comprenant au moins une paire de jambes sensiblement parallèles entre elles, pouvant rouler lorsqu'il est tiré ou poussé et pouvant supporter au moins une charge.

On notera que l'invention ne concerne pas seulement les chariots de transport. Elle concerne en effet également et notamment les poussettes, les bagages, les matériels médicaux pliables, les meubles pliables, les mobiliers d'appoint, les mobiliers de jardin pliables, et les matériels de camping pliables.

Le chariot de transport CT illustré non limitativement sur les figures 1 et 2 comprend un plateau de transport PS, quatre roues RC, une barre de commande BC, et au moins un élément mobile B2.

La barre de commande BC présente ici une forme générale en U. Elle comprend donc deux premières barres B1 sensiblement parallèles entre elles et reliées par une barre transversale BT destinée à être poussée ou tirée par un utilisateur.

Le plateau de transport PS comprend une face supérieure, destinée à supporter des charges et au-dessus de laquelle peut être entraînée en rotation la barre de commande BC, et une face inférieure, opposée à la face supérieure et à laquelle sont ici solidarisées, à rotation, les deux premières barres B1 et deux secondes barres B2 auxquelles sont respectivement couplées deux paires de roues RC, éventuellement montées à rotation (éventuellement à 360°).

Chaque première barre B1 est montée à rotation sur un premier axe A1 (ici considéré comme transversal) qui est solidarisé à un moyen de fixation MF, qui est lui-même solidarisé fixement à la face inférieure du plateau de transport PS.

Les première(s) B1 et seconde(s) B2 barres peuvent présenter une section d'un même diamètre, par exemple égal à 22 mm. Mais elles pourraient présenter des sections de diamètres différents.

On notera que l'on considère dans ce qui suit, à titre d'exemple non limitatif, que l'élément mobile, qui doit être entraîné en rotation sur lui-même par un dispositif de renvoi d'angle D selon l'invention, est une seconde barre B2. Par conséquent, l'expression « seconde barre » désigne ci-après systématiquement l'élément mobile devant être entraîné en rotation sur lui-même (sauf indication contraire explicite). Mais l'élément mobile peut être également un moyen de support de roue(s), une roue (ou un pied), par exemple.

Du fait du choix précité, chaque seconde barre B2 est ici propre à être entraînée en rotation sur elle-même autour d'un second axe A2, qui est espacé d'une distance choisie du premier axe A1 et perpendiculaire à ce dernier (A1), du fait qu'elle constitue ici un élément mobile. Le second axe A2 est donc ici considéré comme longitudinal. Par exemple, et comme illustré non limitativement sur les figures 1 et 2, chaque seconde barre B2 peut être supportée par un moyen de fixation MF. A cet effet, ce dernier (MF) peut comporter un trou traversé par une seconde barre B2 et à l'intérieur duquel cette dernière (B2) peut tourner (autour de son second axe A2) lorsqu'il est entraîné par un dispositif de renvoi d'angle D.

On notera que selon les applications la seconde barre B2 peut :
- être solidarisée en rotation à une pièce PC décrite plus loin et transmettre la rotation à un élément mobile tel qu'une roue (ou un pied),
- être solidarisée à un moyen de fixation MF, notamment pour augmenter la rigidité (suppression d'un jeu) et servir uniquement d'axe de rotation à la pièce PC,
- rester libre en rotation de façon indépendante, éventuellement à disposition pour une autre fonctionnalité, comme par exemple pour participer à la structure tubulaire de l'équipement transformable CT. Dans le cas où elle est agencée sous la forme d'un profilé creux, elle peut également permettre le passage d'un axe de rotation supplémentaire.

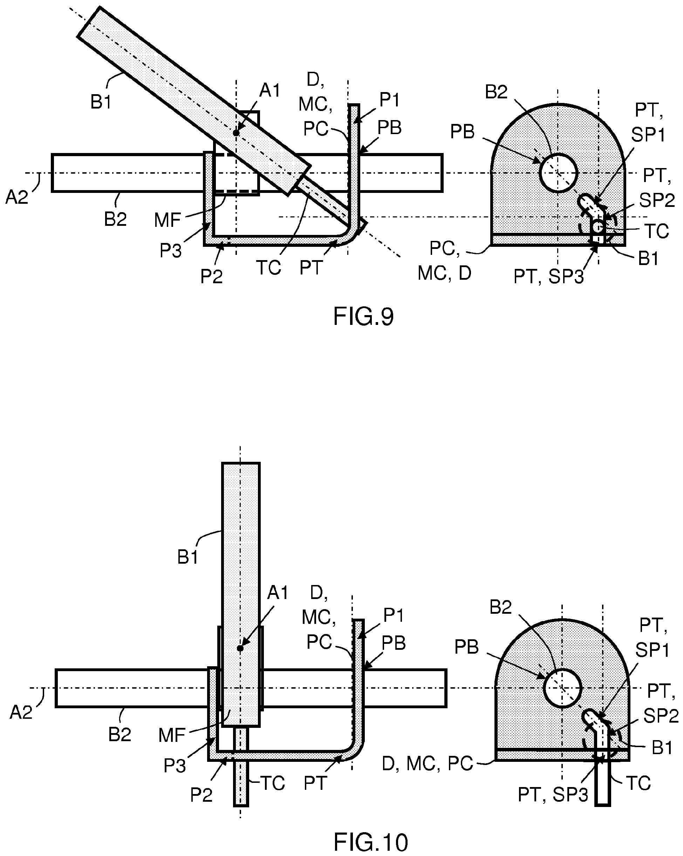

Comme cela est mieux illustré sur les figures 3 à 15, un dispositif de renvoi d'angle D, selon l'invention, comprend des moyens de couplage MC agencés pour contraindre l'élément mobile B2 à tourner sur lui-même (et donc ici autour du second axe A2) lorsqu'une première barre B1 associée est entraînée en rotation.

Pour ce faire, les moyens de couplage MC comprennent une pièce PC qui présente un second axe de rotation, espacé d'une distance choisie du premier axe A1 et perpendiculaire à ce dernier (A1), et destinée à être solidarisée fixement à l'élément mobile B2 en un premier endroit et comportant en un second endroit, espacé de ce premier endroit, un passage PT présentant une forme choisie propre à permettre un déplacement interne d'une partie choisie TC de la première barre B1 associée. Ce déplacement interne est destiné à entraîner en rotation la pièce PC (et donc l'élément mobile B2) sur un premier secteur angulaire lorsque la première barre B1 est entraînée en rotation sur un deuxième secteur angulaire qui est strictement inférieur au premier secteur angulaire.

Il est important de noter que les moyens de couplage MC entraînent dans leur rotation directement un élément mobile de l'équipement transformable CT (ici la seconde barre B2), et si besoin d'autres éléments mobiles qui sont éventuellement accouplés à cette seconde barre B2.

On notera également que le second axe de rotation de la pièce PC est ici confondu avec celui (A2) de la seconde barre B2 du fait que cette dernière constitue l'élément mobile objet du renvoi d'angle. Mais lorsque l'élément mobile objet du renvoi d'angle n'est pas la seconde barre B2, le second axe de rotation de la pièce PC n'a rien à voir avec l'axe autour duquel l'élément mobile tourne sur lui-même.

On notera également qu'au regard de l'effort qui est appliqué à la première barre B1, la force de contre-réaction est obtenue selon les applications par le moyen de fixation MF ou par la seconde barre B2 ou bien par la combinaison du moyen de fixation MF et de la seconde barre B2.

Cet agencement particulièrement avantageux permet d'obtenir de façon simple et peu onéreuse un renvoi d'angle avec démultiplication de la rotation de la première barre B1 pour obtenir une rotation plus importante d'un élément mobile B2.

La pièce PC peut être réalisée en différentes matières, et notamment en acier usiné, en aluminium usiné, ou en matière plastique ou synthétique rigide (par exemple en polypropylène injecté).

La partie choisie TC d'une première barre B1 peut être réalisée de différentes manières.

En effet, et comme illustré sur les figures 1 et 2, il peut s'agir d'une tige TC qui est rapportée à une extrémité d'une première barre B1, parallèle à l'axe de cette dernière (B1), et comportant au moins une portion d'extrémité présentant une section inférieure à la section de cette première barre B1. Par exemple, cette tige TC comprend une extrémité destinée à coopérer avec un passage PT et présentant une section d'un diamètre d'environ 8 mm.

Dans ce mode de réalisation l'axe de la tige TC se retrouve espacé du premier axe A1 d'une distance sensiblement égale au diamètre des deux barres B1 et B2, ce qui permet de faciliter le rangement des deux barres B1 et B2 dans une position parallèle. Cela permet également d'augmenter la démultiplication précitée du fait que l'extrémité de la première barre B1 parcoure dans le premier 1/8 de tour un trajet sur lequel elle a déjà croisé un point à hauteur du second axe de rotation de la pièce PC (ici confondu avec celui (A2) de la seconde barre B2). Pour augmenter la compacité de l'ensemble, il est également possible de réduire le diamètre de la section d'une première barre B1 ou d'une seconde barre B2. On notera que la tige TC peut être solidarisée à la première barre B1 par tout moyen connu de l'homme de l'art, et notamment par emboîtement, soudage, vissage ou collage.

Dans une première variante illustrée sur les figures 3 à 10, la partie choisie TC d'une première barre B1 peut être constituée par une partie d'extrémité de la première barre B1 qui présente une section inférieure à la section générale de la première barre B1 située en amont. Cette partie d'extrémité TC peut, par exemple, présenter une section d'un diamètre d'environ 8 mm. On notera que cette partie d'extrémité TC présente un axe qui n'est pas obligatoirement superposé à l'axe de la première barre B1. En effet, l'axe de cette partie d'extrémité TC peut être espacé de l'axe de la première barre B1 de manière à augmenter la compacité de l'ensemble et/ou répondre à des contraintes d'implantation.

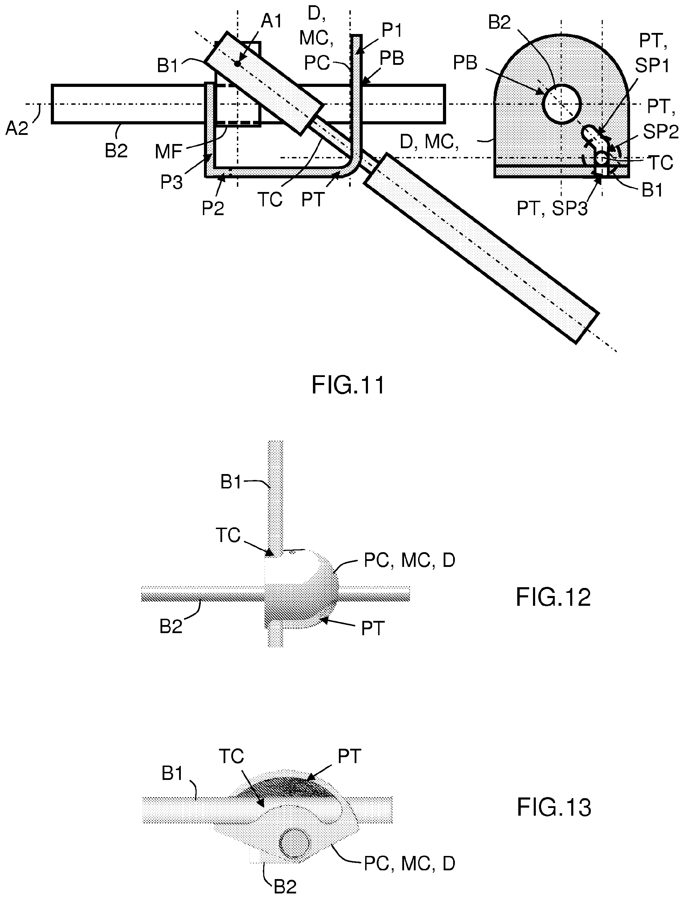

Dans une deuxième variante illustrée sur la figure 11, la partie choisie TC d'une première barre B1 peut être constituée par une partie intermédiaire de la première barre B1 présentant une section inférieure à chaque section présentée par des première et seconde parties de la première barre B1 qui encadrent cette partie intermédiaire. Cette partie intermédiaire TC peut, par exemple, présenter une section d'un diamètre d'environ 8 mm. Cela permet non seulement d'augmenter le nombre de variantes géométriques et/ou cinématiques de structures pliables (ou transformables) qui peuvent être couplées à des dispositifs D, mais également d'envisager que la première portion de la première barre B1 qui est opposée à la seconde portion qui est montée à rotation sur le premier axe A1, présente éventuellement une section différente de celle de cette seconde portion. Cela peut également permettre de réduire le diamètre de la section d'une première barre B1 ou d'une seconde barre B2.

Dans une troisième variante illustrée sur les figures 12 à 15, la partie choisie TC d'une première barre B1 peut être constituée par une partie intermédiaire (ou terminale) de la première barre B1. Dans ce cas, la première barre B1 présente une section sensiblement constante, typiquement une section circulaire d'un diamètre compris entre environ 18 mm et environ 28 mm.

Chaque pièce (de couplage) PC est solidarisée fixement à un élément mobile de l'équipement transformable CT, tel qu'un moyen de support de roue(s), un pied escamotable, une barre perpendiculaire et/ou la seconde barre B2 par tout moyen connu de l'homme de l'art, et notamment par un connecteur de tube, par emboîtement, soudage, vissage ou collage. Par ailleurs, chaque pièce (de couplage) PC peut être réalisée de différentes manières.

En effet, et comme illustré sur les figures 3 à 8, il peut s'agir d'une plaque définie principalement dans un plan sensiblement perpendiculaire au second axe A2. Dans ce cas, la pièce PC comprend un passage PT qui se présente sous la forme d'un trou traversant oblong.

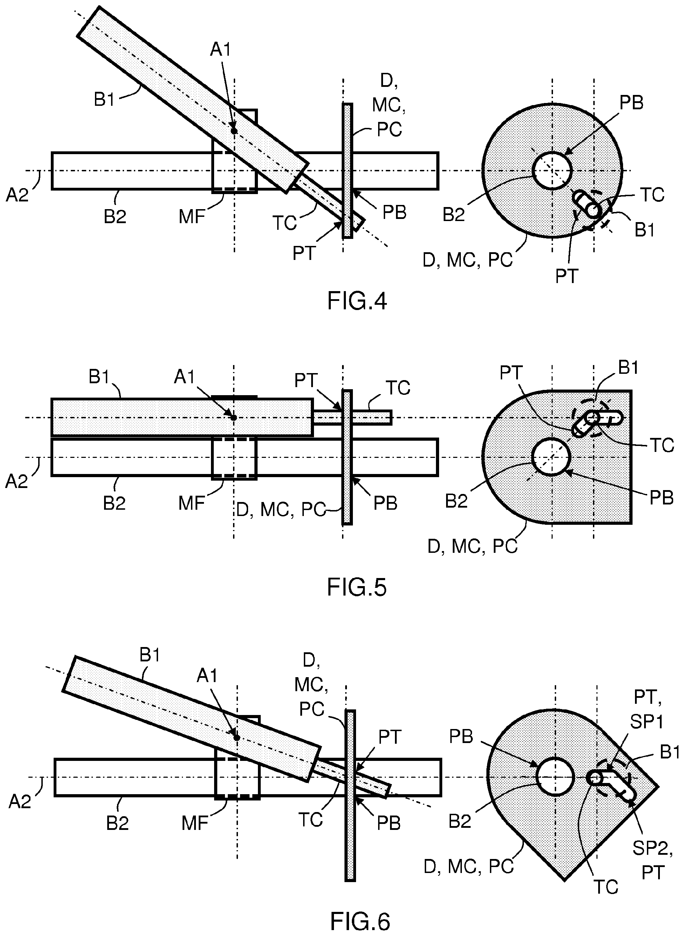

Comme illustré non limitativement sur les figures 3 et 4, chaque plaque PC peut constituer un disque sensiblement circulaire comprenant un trou PB centré sur le second axe A2 et permettant le passage d'une seconde barre B2 associée.

Egalement comme illustré non limitativement sur les figures 3 et 4, le trou traversant PT peut être linéaire et orienté suivant une direction qui est perpendiculaire au second axe A2. L'orientation de ce trou traversant oblong PT est par exemple celle d'un rayon du disque PC. Dans ce cas, lorsque la barre de commande BC est repliée contre la face supérieure du plateau de transport PS (voir figure 3), ce qui correspond ici à un rabattement des roues RC du chariot de transport CT, la partie choisie TC de chaque première barre B1 est logée à une extrémité externe du trou traversant PT qui est située au voisinage du bord périphérique de la plaque PC. Si l'on veut redresser ces roues RC, on entraîne la barre de commande BC (et donc chaque première barre B1) en rotation vers le haut (voir figure 4). Cela provoque un coulissement de la partie choisie TC de chaque première barre B1 dans le trou traversant PT, de son extrémité externe vers son extrémité interne (la plus proche du second axe A2), puis de son extrémité interne vers son extrémité externe (voir figure 4). Ici, l'entraînement en rotation de chaque première barre B1 sur un second secteur angulaire d'environ 40° a provoqué un redressement des deux roues RC, qui sont couplées à la seconde barre B2 associée, d'un premier secteur angulaire de 90°.

On notera que dans ce mode de réalisation le trou traversant oblong PT présente les caractéristiques suivantes:
- la partie TC de la première barre B1 se déplace dans le trou traversant oblong PT suivant des trajets aller et retour qui se superposent partiellement et qui comprennent un point de rebroussement à l'endroit où la partie TC est au plus près du second axe de rotation A2 de la seconde barre B2,
- le trou traversant oblong PT autorise au moins deux points caractéristiques qui sont respectivement placés à une distance du second axe de rotation A2 de la seconde barre B2 dans un rapport égal à la racine carrée de 2.

Si par exemple, l'angle de la position finale de la première barre B1 (lié à la conception de la structure pliable) est supérieur à cet angle d'environ 40°), il est possible de laisser s'échapper la tigeTC du trou traversant oblong PT en ajustant la longueur de cette tige TC au plus court. Il est également possible d'utiliser un autre dispositif pour finaliser la rotation et assurer le verrouillage final des premières barres B1 dans leur position finale redressée.

Dans une variante de réalisation illustrée sur les figures 5 à 8, chaque plaque PC comprend une partie semi-circulaire, comportant un trou PB centré sur le second axe A2 et permettant le passage d'une seconde barre B2 associée, et prolongée par une partie sensiblement rectangulaire. Le trou traversant PT comprend une première sous-partie SP1 linéaire et orientée suivant une première direction perpendiculaire au second axe A2, et une seconde sous-partie SP2 linéaire, prolongeant la première sous-partie SP1 suivant une seconde direction inclinée par rapport à la première direction. L'orientation de la première sous-partie SP1 est par exemple celle d'un rayon du disque PC. La première sous-partie SP1 est destinée à induire un entraînement en rotation de la seconde barre B2 associée, tandis que la seconde sous-partie SP2 est avantageusement destinée à permettre la poursuite du redressement de la barre de commande BC (et donc de chaque première barre B1) sans que cela n'entraîne en rotation la seconde barre B2 associée.

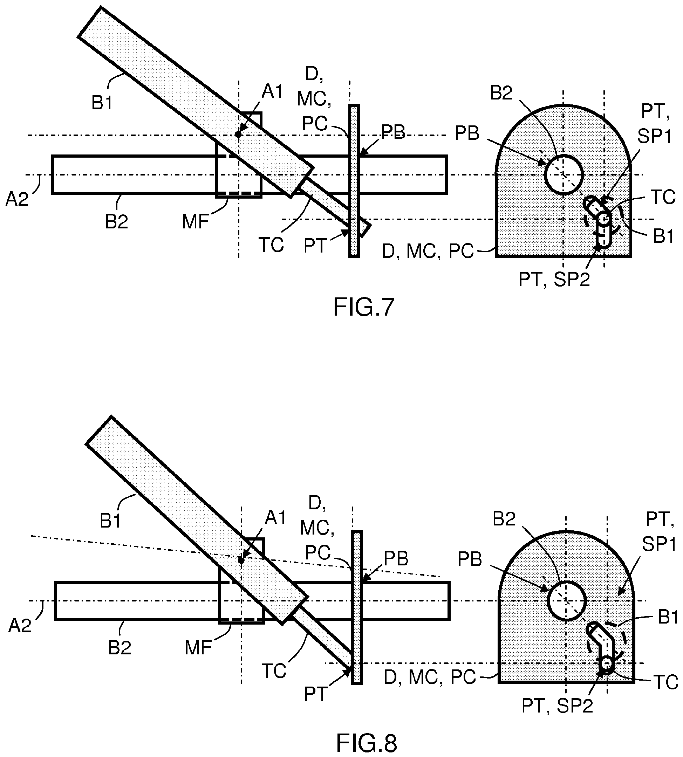

Dans ce cas, lorsque la barre de commande BC est repliée contre la face supérieure du plateau de transport PS, ce qui correspond ici à un rabattement des roues RC du chariot de transport CT, la partie choisie TC de chaque première barre B1 est logée au milieu du trou traversant PT (c'est-à-dire à l'intersection de ses première SP1 et seconde SP2 sous-parties - voir figure 5). Si l'on veut redresser ces roues RC, on entraîne la barre de commande BC (et donc chaque première barre B1) en rotation vers le haut (voir figures 6 à 8). Cela provoque un coulissement de la partie choisie TC de chaque première barre B1 dans la première sous-partie SP1 du trou traversant PT, de son extrémité centrale vers son extrémité interne (la plus proche du second axe A2) (voir figure 6), puis de son extrémité interne vers son extrémité centrale (voir figure 7). Ici, le premier entraînement en rotation de chaque première barre B1 sur un second secteur angulaire d'environ 40° a provoqué un redressement des deux roues RC, qui sont couplées à la seconde barre B2 associée, d'un premier secteur angulaire de 90°. La poursuite du redressement de la barre de commande BC provoque un coulissement de la partie choisie TC de chaque première barre B1 dans la seconde sous-partie SP2 du trou traversant PT, de son extrémité centrale vers son extrémité externe (la plus proche du bord périphérique de la plaque PC) (voir figure 8). Ici, le second entraînement en rotation de chaque première barre B1 sur un troisième secteur angulaire d'environ 20° n'a provoqué qu'un redressement supplémentaire de 20° de la barre de commande BC afin de l'incliner sensiblement à 60° par rapport au plateau de transport PS.

Dans une première variante illustrée sur les figures 1, 2 et 9 à 11, chaque pièce PC est une plaque conformée de manière à présenter trois parties P1 à P3. La première partie P1 est solidarisée fixement à une seconde barre B2 dans un plan qui est sensiblement perpendiculaire au second axe A2. Chaque première partie P1 comprend une partie semi-circulaire, comportant un trou PB centré sur le second axe A2 et permettant le passage d'une seconde barre B2 associée, et prolongée par une partie sensiblement rectangulaire. Le trou traversant PT comprend une première sous-partie SP1 linéaire et orientée suivant une première direction perpendiculaire au second axe A2, et une deuxième sous-partie SP2 linéaire, prolongeant la première sous-partie SP1 suivant une seconde direction inclinée par rapport à la première direction. L'orientation de la première sous-partie SP1 est par exemple celle d'un rayon du disque PC. La première sous-partie SP1 est destinée à induire un entraînement en rotation de la seconde barre B2 associée, tandis que la deuxième sous-partie SP2 est avantageusement destinée à permettre la poursuite du redressement de la barre de commande BC (et donc de chaque première barre B1) sans que cela n'entraîne en rotation la seconde barre B2 associée.

La deuxième partie P2 prolonge la première partie P1 sensiblement perpendiculairement. Elle présente par exemple une forme sensiblement rectangulaire. Cette deuxième partie P2 comporte une troisième sous-partie SP3 du trou traversant oblong PT, linéaire et qui prolonge la deuxième sous-partie SP2 suivant une troisième direction qui est sensiblement parallèle au second axe A2.

La troisième partie P3 prolonge la deuxième partie P2 sensiblement perpendiculairement. Elle présente une forme similaire à celle de la première partie P1 (à savoir une portion semi-circulaire munie d'un trou de passage pour la seconde barre B2 associée et une partie sensiblement rectangulaire). Elle est par ailleurs solidarisée fixement à la seconde barre B2 associée dans un plan qui est sensiblement perpendiculaire au second axe A2. On comprendra que cette troisième partie P3 sert à améliorer la solidarisation de la pièce PC à la seconde barre B2 associée.

On notera que grâce à ce mode de réalisation, chaque pièce PC peut avantageusement constituer une embase de fixation pour un moyen de support d'une roue RC (éventuellement monté à rotation), voire constituer une partie d'un moyen de support d'une roue RC (comme dans l'exemple non limitatif illustré sur les figures 1 et 2). Ici, c'est plus précisément la seconde partie P2 d'une pièce PC à laquelle sont solidarisés fixement des moyens de support auxquels est solidarisée à rotation (au moins) une roue RC.

Dans une variante de réalisation (non illustrée) de la précédente première variante, chaque pièce PC est conformée de manière à présenter trois parties P1 à P3. Les première P1 et troisième P3 parties sont respectivement et sensiblement identiques aux première P1 et troisième P3 parties de la pièce PC de la première variante, décrite ci-avant. Seul l'agencement de la deuxième partie P2 est différent. En effet, la deuxième partie P2 constitue ici une portion d'un cylindre qui prolonge la première partie P1 sensiblement perpendiculairement, qui possède un axe confondu avec le second axe A2, et qui comporte une troisième sous-partie SP3 du trou traversant oblong PT, hélicoïdale et prolongeant la deuxième sous-partie SP2. Cette troisième sous-partie SP3 hélicoïdale permet avantageusement de poursuivre l'entraînement en rotation de la seconde barre B2 associée sur un quatrième secteur angulaire, avec ou sans une pause lors du coulissement de la partie choisie TC dans la deuxième sous-partie SP2. On peut ainsi obtenir une rotation d'une seconde barre B2 d'environ 180° grâce à une rotation d'une première barre B1 d'environ 90°, par exemple.

A titre d'exemple, lorsque l'équipement transformable CT est un bagage équipé de roues escamotables :
- si dans la position repliée (ou rangée) les roues RC sont positionnées contre le fond du bagage, il faut au moyen d'une première barre de levier B1 pouvoir faire pivoter les roues RC d'un quart de tour grâce aux moyens de couplage MC,
- si dans la position repliée (ou rangée) les roues RC sont positionnées contre les faces latérales du bagage, il faut au moyen d'une première barre de levier B1 pouvoir faire pivoter les roues RC d'un demi-tour grâce aux moyens de couplage MC.

On notera que dans les modes de réalisation qui précèdent, la largeur du passage PT est au moins égale, par valeur supérieure, au diamètre de la section de la partie choisie TC. Mais il est préférable qu'elle soit strictement supérieure au diamètre de la section de la partie choisie TC afin de tenir compte de l'inclinaison finale de cette dernière (TC). Par exemple, lorsque le diamètre de la section de la partie choisie TC est égal à 8 mm, il est préférable que la largeur du passage PT soit égale à environ 12 mm lorsque l'inclinaison est de l'ordre de 45°.

Dans une seconde variante de réalisation illustrée sur les figures 12 à 15, chaque pièce PC présente une forme au moins partiellement sphérique. Dans ce cas, chaque pièce PC comprend un passage PT qui se présente sous la forme d'un conduit tridimensionnel (ou 3D) partiellement ouvert et comportant au moins une sous-partie hélicoïdale. Cela permet avantageusement d'avoir un entraînement en rotation continu de la seconde barre B2 sur un premier secteur angulaire consécutivement à l'entraînement en rotation de la première barre B1 associée sur un second secteur angulaire (inférieur au premier secteur angulaire). On peut ainsi obtenir une rotation d'une seconde barre B2 comprise entre environ 90° et environ 180° grâce à une rotation d'une première barre B1 d'environ 90°, par exemple.

On notera que, comme dans certaines variantes de réalisation décrites précédemment, le conduit 3D PT peut éventuellement comporter une autre sous-partie sensiblement linéaire prolongeant sa sous-partie hélicoïdale et destiné à permettre une poursuite de l'entraînement en rotation de la première barre B1 jusqu'à une position finale, sans que cela n'entraîne en rotation la seconde barre B2 associée. En variante ou en complément, le conduit 3D PT peut éventuellement comporter une autre sous-partie sensiblement linéaire précédant sa sous-partie hélicoïdale et destiné à permettre un début d'entraînement en rotation de la première barre B1, sans que cela n'entraîne en rotation la seconde barre B2 associée.

Ce mode de réalisation permet également d'améliorer la portée du contact avec la première barre B1, tout en protégeant les usagers de la partie choisie TC de cette dernière (B1). Il peut également et éventuellement permettre une amélioration de l'esthétique.

Cette pièce PC peut, par exemple, être réalisée dans un matériau plastique ou composite, comme par exemple un polyamide, un polypropylène, du téflon ou du rilsan, notamment de manière à faciliter le glissement de la partie choisie TC de la première barre B1.

On notera que le mode de réalisation illustré sur les figures 12 et 13 est destiné à permettre un entraînement en rotation sur 90° de la seconde barre B2, via un entraînement en rotation d'environ 40° de la première barre B1, poursuivi par un entraînement en rotation complémentaire d'environ 50° de la première barre B1 pour que cette dernière (B1) gagne une position finale sensiblement perpendiculaire au plateau de transport PS.

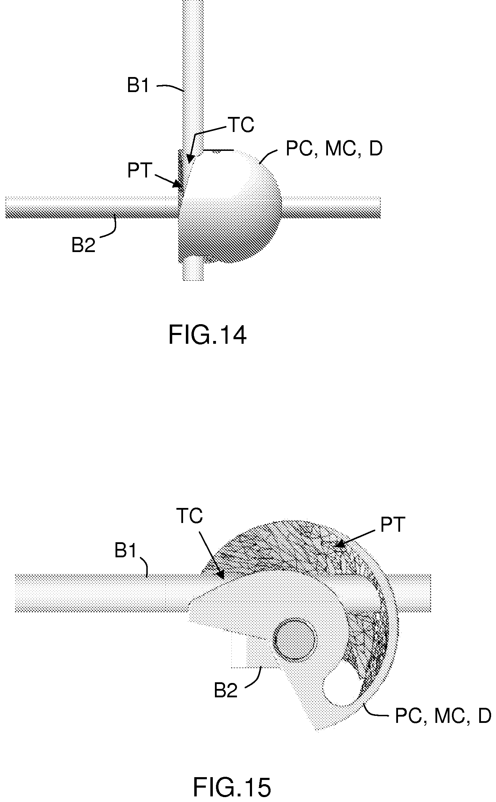

Le mode de réalisation illustré sur les figures 14 et 15 est destiné à permettre un entraînement en rotation sur 180° de la seconde barre B2, via un entraînement en rotation d'environ 80° de la première barre B1, poursuivi par un entraînement en rotation complémentaire d'environ 10° de la première barre B1 pour que cette dernière (B1) gagne une position finale sensiblement perpendiculaire au plateau de transport PS.

On notera également qu'il est avantageusement possible d'ajouter localement à la pièce PC un moyen destiné à permettre un verrouillage de la partie choisie TC d'une première barre B1 dans une position finale (correspondant à un redressement complet).

L'invention offre plusieurs avantages, et notamment :
- l'intégration d'un dispositif de renvoi d'angle simple et peu onéreux dans certaines applications pour lesquelles on était réticent jusqu'à présent à utiliser des engrenages,
- une démultiplication (ou non linéarité) de la rotation de la première barre qui permet en phase finale de déploiement de ne pas introduire de jeux fonctionnels, par exemple au niveau de la rotation de roues ou de pieds,
- la possibilité dans le cas d'une intégration dans un chariot de transport de charge de déployer les roues ou pieds dès le premier quart de tour de déploiement des barres et de pouvoir poursuivre ensuite le déploiement du chariot, les roues ou pieds étant déjà en place avant le contact avec le sol,
- l'absence de lubrification, graissage ou d'étanchéité,
- une compréhension immédiate du fonctionnement par l'utilisateur.

## Revendications

1. Dispositif de renvoi d'angle (D) pour un équipement transformable (CT) comprenant une première barre (B1) montée à rotation sur un premier axe (A1) et un élément mobile (B2) propre à être entraîné en rotation sur lui-même, ledit dispositif (D) comprenant des moyens de couplage (MC) agencés pour contraindre ledit élément mobile (B2) à tourner sur lui-même lorsque ladite première barre (B1) est entraînée en rotation, **caractérisé en ce que** lesdits moyens de couplage (MC) comprennent une pièce (PC) présentant un second axe de rotation (A2) espacé d'une distance choisie dudit premier axe (A1) et perpendiculaire à ce dernier (A1), destinée à être solidarisée fixement audit élément mobile (B2) en un premier endroit, et comportant en un second endroit, espacé dudit premier endroit, un passage (PT) présentant une forme de trou oblong traversant et permettant un déplacement interne d'une partie choisie (TC) de ladite première barre (B1) destiné à l'entraîner en rotation sur un premier secteur angulaire lorsque ladite première barre (B1) est entraînée en rotation sur un deuxième secteur angulaire strictement inférieur audit premier secteur angulaire.

2. Dispositif selon la revendication 1, **caractérisé en ce que** ledit trou traversant (PT) est linéaire et orienté suivant une direction perpendiculaire audit second axe (A2).

3. Dispositif selon la revendication 1, **caractérisé en ce que** ledit trou traversant (PT) comprend une première sous-partie (SP1) linéaire et orientée suivant une première direction perpendiculaire audit second axe (A2), et une seconde sous-partie (SP2) linéaire, prolongeant ladite première sous-partie (SP1) suivant une seconde direction inclinée par rapport à ladite première direction.

4. Dispositif selon la revendication 1, **caractérisé en ce que** ladite pièce (PC) est une plaque comprenant i) une première partie (P1) solidarisée fixement à ladite seconde barre (B2) dans un plan sensiblement perpendiculaire audit second axe (A2), et comprenant une première sous-partie (SP1) d'un trou traversant oblong définissant ledit passage (PT), linéaire et orientée suivant une première direction perpendiculaire audit second axe (A2) et une deuxième sous-partie (SP2) dudit trou traversant oblong (PT), linéaire et prolongeant ladite première sous-partie (SP1) suivant une deuxième direction inclinée par rapport à ladite première direction, ii) une deuxième partie (P2) prolongeant ladite première partie (P1) sensiblement perpendiculairement et comportant une troisième sous-partie (SP3) dudit trou traversant oblong (PT), linéaire et prolongeant ladite deuxième sous-partie (SP2) suivant une troisième direction sensiblement parallèle audit second axe (A2), et iii) une troisième partie (P3) prolongeant ladite deuxième partie (P2) sensiblement perpendiculairement et solidarisée fixement à ladite seconde barre (B2) dans un plan sensiblement perpendiculaire audit second axe (A2).

5. Dispositif selon la revendication 1, **caractérisé en ce que** ladite pièce (PC) comprend i) une première partie (P1) en forme de plaque solidarisée fixement à ladite seconde barre (B2) dans un plan sensiblement perpendiculaire audit second axe (A2), et comprenant une première sous-partie (SP1) d'un trou traversant oblong définissant ledit passage (PT), linéaire et orientée suivant une première direction perpendiculaire audit second axe (A2) et une deuxième sous-partie (SP2) dudit trou traversant oblong (PT), linéaire et prolongeant ladite première sous-partie (SP1) suivant une deuxième direction inclinée par rapport à ladite première direction, ii) une deuxième partie (P2) constituant une portion d'un cylindre prolongeant ladite première partie (P1) sensiblement perpendiculairement, et comportant une troisième sous-partie (SP3) dudit trou traversant oblong (PT), hélicoïdale et prolongeant ladite deuxième sous-partie (SP2), et iii) une troisième partie (P3) en forme de plaque prolongeant ladite deuxième partie (P2) sensiblement perpendiculairement et solidarisée fixement à ladite seconde barre (B2) dans un plan sensiblement perpendiculaire audit second axe (A2).

6. Dispositif selon l'une des revendications 4 et 5, **caractérisé en ce que** ladite deuxième partie (P2) de la pièce (PC) est solidarisée fixement à des moyens de support auxquels est solidarisée à rotation au moins une roue (RC).

7. Dispositif selon la revendication 1, **caractérisé en ce que** ladite pièce (PC) présente une forme au moins partiellement sphérique, et **en ce que** ledit passage (PT) est un conduit partiellement ouvert et comportant au moins une sous-partie hélicoïdale.

8. Dispositif selon l'une des revendications 1 à 7, **caractérisé en ce que** ladite partie choisie (TC) de la première barre (B1) est choisie dans un groupe comprenant au moins i) une tige rapportée à une extrémité de ladite première barre (B1), parallèle à un axe de cette dernière (B1), et comportant au moins une portion d'extrémité présentant une section inférieure à une section de ladite première barre (B1), ii) une partie d'extrémité de ladite première barre (B1) présentant une section inférieure à une section générale de ladite première barre (B1) située en amont, iii) une partie intermédiaire de ladite première barre (B1), et iv) une partie intermédiaire de ladite première barre (B1) présentant une section inférieure à une section présentée par des parties de ladite première barre (B1) qui encadrent ladite partie intermédiaire.

9. Equipement transformable (CT) comprenant une première barre (B1) montée à rotation sur un premier axe (A1) et un élément mobile (B2) propre à être entraîné en rotation sur lui-même, **caractérisé en ce qu'**il comprend au moins un dispositif de renvoi d'angle (D) selon l'une des revendications précédentes, couplé à ladite première barre (B1) et audit élément mobile (B2).

10. Equipement selon la revendication 9, **caractérisé en ce qu'**il est choisi dans un groupe comprenant au moins un chariot de transport, une poussette, un bagage, un matériel médical pliable, un meuble pliable, un mobilier d'appoint, un mobilier de jardin pliable, et un matériel de camping pliable.

## Patentansprüche

1. Winkelgetriebevorrichtung (D) für eine verwandelbare Vorrichtung (CT), die eine erste Stange (B1), die drehend auf einer ersten Achse (A1) montiert ist, und ein bewegliches Element (B2), das geeignet ist, um in Drehung um sich selbst angetrieben zu werden, umfasst, wobei die Vorrichtung (D) Kopplungsmittel (MC) umfasst, die eingerichtet sind, um das bewegliche Element (B2) zu zwingen, um sich selbst zu drehen, wenn die erste Stange (B1) in Drehung angetrieben wird, **dadurch gekennzeichnet, dass** die Kopplungsmittel (MC) ein Teil (PC) umfassen, das eine zweite Drehachse (A2) aufweist, die um einen ausgewählten Abstand von der ersten Achse (AA) beabstandet und zu dieser Letzteren (A1) senkrecht ist, die dazu bestimmt ist, stationär mit dem beweglichen Element (B2) an einer ersten Stelle verbunden zu sein, und an einer zweiten Stelle, die von der ersten Stelle beabstandet ist, eine Passage (PT) umfasst, die eine Form eines durchgehenden Langlochs aufweist und eine innere Bewegung eines ausgewählten Teils (TC) der ersten Stange (B1) erlaubt, die dazu bestimmt ist, sie in Drehung auf einem ersten Winkelsektor anzutreiben, wenn die erste Stange (B1), in Drehung auf einem zweiten Winkelsektor, der strikt kleiner ist als der erste Winkelsektor, angetrieben wird.

2. Vorrichtung nach Anspruch 1, **dadurch gekennzeichnet, dass** das durchgehende Loch (PT) linear und entlang einer Richtung senkrecht zu der zweiten Achse (A2) ausgerichtet ist.

3. Vorrichtung nach Anspruch 1, **dadurch gekennzeichnet, dass** das durchgehende Loch (PT) einen ersten Unterabschnitt (SP1) umfasst, der linear und entlang einer ersten Richtung senkrecht zu der zweiten Achse (A2) ausgerichtet ist, und einen zweiten linearen Unterabschnitt (SP2), der den ersten Unterabschnitt (SP1) entlang einer zweiten Richtung, die in Bezug auf die erste Richtung geneigt ist, verlängert.

4. Vorrichtung nach Anspruch 1, **dadurch gekennzeichnet, dass** das Teil (PC) eine Platte ist, die i) einen ersten Teil (P1) umfasst, der stationär mit der zweiten Stange (B2) in einer Ebene im Wesentlichen senkrecht zu der zweiten Achse (A2) verbunden ist, und einen ersten Unterabschnitt (SP1) eines durchgehenden Langlochs umfasst, das die Passage (PT) definiert, die linear und entlang einer ersten Richtung senkrecht zu der zweiten Achse (A2) ausgerichtet ist, und einen zweiten Unterabschnitt (SP2) des durchgehenden Langlochs (PT), der linear ist und den ersten Unterabschnitt (SP1) entlang einer zweiten Richtung, die in Bezug auf die erste Richtung geneigt ist, verlängert, ii) einen zweiten Teil (P2), der den ersten Teil (P1) im Wesentlichen senkrecht verlängert und einen dritten Unterabschnitt (SP3) des durchgehenden Langlochs (PT) umfasst, der linear ist und den zweiten Unterabschnitt (SP2) entlang einer dritten Richtung im Wesentlichen parallel zu der zweiten Achse (A2) verlängert, und iii) einen dritten Teil (P3), der den zweiten Teil (P2) im Wesentlichen senkrecht verlängert und stationär an der zweiten Stange (B2) in einer Ebene, die im Wesentlichen zu der zweiten Achse (A2) senkrecht ist, befestigt ist.

5. Vorrichtung nach Anspruch 1, **dadurch gekennzeichnet, dass** das Teil (PC) i) einen ersten Teil (P1) in Plattenform umfasst, der stationär mit der zweiten Stange (B2) in einer Ebene im Wesentlichen senkrecht zu der zweiten Achse (A2) verbunden ist, und einen ersten Unterabschnitt (SP1) eines durchgehenden Langlochs umfasst, das die Passage (PT) definiert, die linear und entlang einer ersten Richtung senkrecht zu der zweiten Achse (A2) ausgerichtet ist, und einen zweiten Unterabschnitt (SP2) des durchgehenden Langlochs (PT), der linear ist und den ersten Unterabschnitt (SP1) entlang einer zweiten Richtung, die in Bezug auf die erste Richtung geneigt ist, verlängert, ii) einen zweiten Teil (P2), der einen Abschnitt eines Zylinders bildet, der den ersten Teil (P1) im Wesentlichen senkrecht verlängert und einen dritten Unterabschnitt (SP3) des durchgehenden Langlochs (PT) umfasst, der schraubenförmig ist und den zweiten Unterabschnitt (SP2) verlängert, und iii) einen dritten Teil (P3) in Plattenform, der den zweiten Teil (P2) im Wesentlichen senkrecht verlängert und stationär mit der zweiten Stange (B2) in einer Ebene im Wesentlichen senkrecht zu der zweiten Achse (A2) verbunden ist.

6. Vorrichtung nach einem der Ansprüche 4 und 5, **dadurch gekennzeichnet, dass** der zweite Teil (P2) des Teils (PC) stationär mit Tragmitteln verbunden ist, an welchen mindestens ein Rad (RC) in Drehung verbunden ist.

7. Vorrichtung nach Anspruch 1, **dadurch gekennzeichnet, dass** das Teil (PC) eine mindestens teilweise sphärische Form aufweist, und dass die Passage (PT) eine teilweise offene Leitung ist und mindestens einen schraubenförmigen Unterabschnitt umfasst.

8. Vorrichtung nach einem der Ansprüche 1 bis 7, **dadurch gekennzeichnet, dass** der ausgewählte Teil (TC) der ersten Stange (B1) aus einer Gruppe ausgewählt ist, die mindestens i) einen Schaft, der an ein Ende der ersten Stange (B1) angebaut ist, umfasst, der zu einer Achse dieser Letzteren (B1) parallel ist und mindestens einen Endabschnitt umfasst, der einen Querschnitt aufweist, der kleiner ist als ein Querschnitt der ersten Stange (B1), ii) einen Endteil der ersten Stange (B1), der einen Querschnitt aufweist, der kleiner ist als ein allgemeiner Querschnitt der ersten Stange (B1), der stromaufwärts liegt, iii) einen Zwischenteil der ersten Stange (B1), und iv) einen Zwischenteil der ersten Stange (B1), der einen Querschnitt aufweist, der kleiner ist als ein Querschnitt, den die Teile der ersten Stange (B1), die den Zwischenteil einrahmen, aufweisen.

9. Verwandelbare Vorrichtung (CT), die eine erste Stange (B1) umfasst, die in Drehung auf einer ersten Achse (A1) montiert ist, und ein bewegliches Element (B2), das geeignet ist, in Drehung um sich selbst angetrieben zu werden, **dadurch gekennzeichnet, dass** sie mindestens ein Winkelgetriebe (D) nach einem der vorhergehenden Ansprüche umfasst, das mit der ersten Stange (B1) und dem beweglichen Element (B2) gekoppelt ist.

10. Vorrichtung nach Anspruch 9, **dadurch gekennzeichnet, dass** sie aus einer Gruppe ausgewählt ist, die mindestens einen Transportwagen, einen Kinderwagen, ein Gepäckstück, ein zusammenklappbares medizinisches Material, ein Klappmöbel, ein Zustellmobiliar, ein zusammenklappbares Gartenmobiliar, und ein zusammenklappbares Campingmaterial umfasst.

## Claims

1. An angular gear device (D) for a convertible apparatus (CT) including a first rod (B1) rotatably mounted on a first axis (A1) and a movable element (B2) suitable for being driven in rotation about itself, said device (D) including coupling means (MC) arranged to compel said movable element (B2) to turn about itself when said first rod (B1) is driven in rotation, **characterized in that** said coupling means (MC) include a part (PC) having a second rotation axis (A2) spaced by a selected distance from said first axis (A1) and perpendicular to the latter (A1), intended to be fixedly secured to said movable element (B2) at a first location, and comprising at a second location, spaced from said first location, a passage (PT) having a shape of an oblong through-hole and permitting an internal displacement of a selected portion (TC) of said first rod (B1) intended to drive it in rotation over a first angular sector when said rod (B1) is driven in rotation over a second angular sector strictly smaller than said first angular sector.

2. The device according to Claim 1, **characterized in that** said through-hole (PT) is linear and oriented along a direction perpendicular to said second axis (A2).

3. The device according to Claim 1, **characterized in that** said through-hole (PT) includes a first sub-portion (SP1) which is linear and oriented along a first direction perpendicular to said second axis (A2), and a second linear sub-portion (SP2), extending said first sub-portion (SP1) along a second direction inclined with respect to said first direction.

4. The device according to Claim 1, **characterized in that** said part (PC) is a plate including i) a first portion (P1) fixedly secured to said second rod (B2) in a plane substantially perpendicular to said second axis (A2), and including a first sub-portion (SP1) of an oblong through-hole defining said passage (PT), linear and oriented along a first direction perpendicular to said second axis (A2), and a second sub-portion (SP2) of said oblong through-hole (PT), linear and extending said first sub-portion (SP1) along a second direction inclined with respect to said first direction, ii) a second portion (P2) extending said first portion (P1) substantially perpendicularly and comprising a third sub-portion (SP3) of said oblong through-hole (PT), linear and extending said second sub-portion (SP2) along a third direction substantially parallel to said second axis (A2), and iii) a third portion (P3) extending said second portion (P2) substantially perpendicularly and fixedly secured to said second rod (B2) in a plane substantially perpendicular to said second axis (A2).

5. The device according to Claim 1, **characterized in that** said part (PC) includes i) a first portion (P1) in the form of a plate fixedly secured to said second rod (B2) in a plane substantially perpendicular to said second axis (A2), and including a first sub-portion (SP1) of an oblong through-hole defining said passage (PT), linear and oriented along a first direction perpendicular to said second axis (A2) and a second sub-portion (SP2) of said oblong through-hole (PT), linear and extending said first sub-portion (SP1) along a second direction inclined with respect to said first direction, ii) a second portion (P2) constituting a portion of a cylinder extending said first portion (P1) substantially perpendicularly, and comprising a third sub-portion (SP3) of said oblong through-hole (PT), helicoidal and extending said second sub-portion (SP2), and iii) a third portion (P3) in the form of a plate extending said second portion (P2) substantially perpendicularly and fixedly secured to said second rod (B2) in a plane substantially perpendicular to said second axis (A2).

6. The device according to one of Claims 4 and 5, **characterized in that** said second portion (P2) of the part (PC) is fixedly secured to support means to which at least one wheel (RC) is rotatably secured.

7. The device according to Claim 1, **characterized in that** said part (PC) has an at least partially spherical shape, and **in that** said passage (PT) is a duct which is partially open and comprising at least one helicoidal sub-portion.

8. The device according to one of Claims 1 to 7, **characterized in that** said selected portion (TC) of the first rod (B1) is selected from a group including at least i) a pin added to one end of said first rod (B1), parallel to an axis of the latter (B1), and comprising at least an end portion having a cross section smaller than a cross section of said first rod (B1), ii) an end portion of said first rod (B1) having a cross section smaller than a general cross section of said first rod (B1) situated above, iii) an intermediate portion of said first rod (B1), and iv) an intermediate portion of said first rod (B1) having a cross section smaller than a cross section presented by portions of said first rod (B1) which surround said intermediate portion.

9. A convertible apparatus (CT) including a first rod (B1) rotatably mounted on a first axis (A1) and a movable element (B2) suitable for being driven in rotation about itself, **characterized in that** it includes at least one angular gear device (D) according to one of the preceding claims, coupled to said first rod (B1) and to said movable element (B2).

10. The apparatus according to Claim 9, **characterized in that** it is selected from a group including at least a transport trolley, a buggy, a luggage item, an item of foldable medical equipment, a foldable furniture item, an item of occasional furniture, an item of foldable garden furniture, and an item of foldable camping equipment.
